# EUROPEAN PATENT APPLICATION

(11) **EP 1 307 004 A1**
(43) Date of publication of application: **02.05.2003**
(21) Application number: 02396157.6
(22) Date of filing: 28.10.2002
(51) Int. Cl.: H04L 12/28

(54) **Wireless communication network**

(30) Priority: 26.10.2001 FI 20012080
(71) Applicant: Sonera Oyj, 00510 Helsinki (FI)
(72) Inventor: Vitikka, Iipo, 00100 Helsinki (FI); Tervo, Mika, 33820 Tampere (FI)
(74) Representative: Pursiainen, Timo Pekka

(57) **Abstract**

A communication network which serves wireless terminals (3) arranged for communication needs of users, and which comprises means (4) for base station functions and for forming a radio communication to the terminal (3), as well as means (9) for base station controller functions, which are connected to one or more first means (4) to control their operation and, if necessary, to implement communication between them. Furthermore, the communication network is arranged to serve wireless terminals (3) which are arranged for the communication needs of users belonging to a defined group, wherein it comprises at least first means (4) for base station functions and for forming a radio communication with the terminal (3), as well as second means (17) for giving the user an address for communication, which second means (17) communicate with one or more first means (4). Said communication networks also comprise third means (5, 6, 7, 10) for forming a bridged and/or routed communication network connection between said first means and second means, wherein said bridged and/or routed communication network connection is arranged to interconnect said first and second means which are located separately from each other.

## Description

### Field of the invention

The present invention relates to an open communication network according to the preamble of claim 1. The invention also relates to a communication network as described in the preamble of claim 13.

### Background of the invention

To allow better mobility of persons, there are mobile systems of prior art available, in which wireless communication units operate. Such a device to be mentioned is a mobile phone complying, for example, with the digital GSM standard specifications (Global System for Mobile communications, GSM-1800, GSM-1900) and operating in a mobile communications network based on a cellular network (PLMN, public land mobile network). In addition to a speech connection, the GSM network also provides data transmission services. Also other systems, such as the High Speed Circuit Switched Data (HSCSD), and the General Packet Radio System (GPRS), are partly based on the GSM system. The GPRS supports the Internet Protocol (IP).

According to prior art, the mobile communication network comprises a large number of network elements, such as the base station subsystem (BSS) including a base transceiver station (BTS) serving each cell and communicating with a terminal, for example a mobile station (MS), and a base station controller (BSC). The different base station controllers, in turn, communicate with the mobile switching center (MSC). Between the mobile switching center and the base station controller there is a standardized communication interface which, in the GSM system, is called interface A. The interface is used for the control of the base station system, for the processing of calls, as well as for the updating of location management data. Interface A-bis, in turn, refers to the interface between the base station controller and the base station. This interface is used to connect the base station with the base station controller by telephone lines. The mobile communication network requires versatile transfer of data, *i.e.* signalling, between the different network elements, which is implemented by means of various interfaces, the allowed functions being standardized. Interface Um, in turn, is the interface between the terminal and the base station, for the transmission of signalling between the terminal and the network as well as the information of the terminal user, coded by means of digital time division multiple access (TDMA).

The MSC system maintains for example information on the location of the mobile station in the area of different cells by means of a home location register HLR and a visitor location register VLR. These registers HLR and VLR comprise, for example, the subscriber's MSISDN and IMSI identifications which are also stored on the SIM (subscriber identification module) card of the mobile station. The MSISDN (mobile subscriber international ISDN number) is used for the routing of calls. An individual IMSI code (International mobile subscriber identification) is used to identify the mobile subscriber, and this number is given by the mobile phone to the network in connection with the log-in. The base station transmits location and status data of the terminal to the mobile switching centre. The transfer of the terminal from one cell to another will cause updating of the location data, and the terminal is handed over to radio communication with another base station, which function is called roaming. The cells constitute so-called location areas (LA), within whose range the terminals move or may also be in a stationary location.

Various electronic devices, such as portable personal computers (PC) are often provided with an expansion slot to which a standardized expansion card can be connected. One known expansion card is the PC card complying with the PCMCIA (Personal Computer Memory Card International Association) standard. If necessary, the expansion card may contain the SIM card, the radio parts and the internal antenna of a wireless communication device, wherein the PC may, by means of this communication unit, communicate via the base station with a communication network, which may also be a wireless local area network (WLAN). The expansion card constitutes a network card (Wireless LAN card) for the wireless local area network. If necessary, the wireless terminal equipment (TE) is authenticated. The authentication must be performed, for example, for finding out of the user's rights and for the routing of the data transmission, wherein the location of the terminal is also determined.

The premises of a company are normally equipped with a wired local area network, in many cases even a wireless local area network. The premises of a company which are physically separated, located in different buildings, in different localities and even in different countries, may be covered by a single flexible and protected communication network, for example by operator wireless local area networks. Thus, all wireless terminals located within the range of operation of the base stations of the company have access to the company's intranet, databases and e-mail in any outlet of the company. Consequently, the operating ranges may be located at even long distances physically and geographically, but there is no difference in the operation of the net-work from the user's point of view. The connection to the Intranet is implemented via the Internet and normally also via a firewall server of the company, wherein the security can be guaranteed.

Each terminal requires a connection to the WLAN and possibly further to the Internet. The connection is implemented by means of a wireless LAN access point (WLAN AP), whose operation corresponds to the functions of a base station and which in many cases also allows so-called roaming functions between different access points. The terminal communicates with the access point by means of a network card. Alternatively, the access point is used for example as a wireless bridge to a wired LAN network, for example Ethernet network of the company. Other wired and wireless terminals are, in turn, connected to the local area network, and the communication within the office is implemented via the wired local area network.

Each wireless local area network also comprises a gateway server which is used as a gateway to the Internet. The local area network can be integrated as an operator wireless local area network (OWLAN) by using a so-called access server (AS) as the gateway, wherein a routed connection is formed to the operator's mobile switching center, a server for identifying or authenticating the user (authentication server), a database, or another server responsible for the debiting, data control or the maintenance of the system. Routing protocols are necessary for the Internet network, because they are used by the network communication devices, routers, to exchange routing data and to transmit information, normally IP packets, to the correct locations on the basis of the network addresses. Each network element is provided with a given address, and the router transmits the traffic from one element or network to another. The access server may also be responsible for the authentication of users, wherein it communicates with the server of the operator. The authentication is based, for example, on the SIM card or the use of a user identification and a password. The access server may also be responsible for the monitoring of the local area network and for the compiling of data for debiting.

The gateway or access server is thus used as a linking factor between the local area network and the mobile switching centre, wherein from the center's point of view, said servers function as base station controllers, wherein the interface can also be formed to correspond to the standardized interface A. Thus, the system of servers and routers forms the base station subsystem. The interface between the local area network and the gateway server depends on the implementation of the network, the communication protocols, and the application programming interfaces.

Upon constructing a wireless local area network also provided with a connection to an external network, so-called bridges and switches are used to couple the local area network to the external network at one or more points. The switch or bridge is used on the level of network card addresses or device addresses, on the basis of which it also learns the locations of the devices, wherein, if necessary, it only transmits the communication further if no terminal complying with the address is coupled to the switch. Instead of switches, it is also possible to use a router to form as versatile communication channels as possible between the network elements coupled to the incoming and outgoing lines of the router. Said gateway server is also generally used as a router. A so-called bridging connection implemented with a router (bridging router) utilizes bridging protocols which can be used to process both routing protocols (*e.g.* IP, wherein the router is normally used as a router) and non-routing protocols (wherein the router is used as a bridge). By means of a bridging connection, it is possible to create a network in which different servers and terminals seem to operate as in a normal local area network utilizing netcard addresses. The servers and the terminals may be located even at long distances from each other, wherein the network seems to be formed of several routing areas, *i.e.* virtual networks. Bridging involves the concept of tunneling, which normally refers to the combination of two networks using the same technology by means of a third network with a different technology. The tunneling is implemented by means of so-called multi-protocol routers, by using for example ATM (asynchronous transfer mode), Frame Relay, or IPSec tunneling (IP security).

The implementation of a modern wireless communication network, such as a service network, is based on said OWLAN principle, in which the operator local area network consists of base stations and base station controllers at the place of business. The base stations are coupled to their own independent local area network. In addition, a connection is needed to the operator's mobile switching center and other servers, wherein a routed Internet connection is also needed for each place of business. The users can be identified in a centralized manner, and simultaneously also roaming functions between different places of business will be possible.
However, the construction of a routed data transmission connection and a base station controller involves the disadvantages of increased equipment costs and particularly the increased need for maintenance, servicing and management. As a result, the costs at each place of business become high and unprofitable, particularly at outlets with a small number of users. Similarly, the management of IP addresses is heavy. Each network terminal must have an individual IP address.

In parallel with the wireless service network, companies may provide their places of business with an independent closed communication network to serve the employees of the company and their access to the intranet of the company at any outlet of the base station of the company. Such a closed service network is implemented by forming a base station connection in the intranet, wherein the connection of users in the network is limited and controlled, for example, by means of passwords and user identifications. Preferably, the closed communication network of the described kind is managed and controlled by the company.

Known wireless communication networks, such as the described OWLAN managed by operators, are not suitable as closed service networks, because their additional data security cannot be utilized according to requirements by companies. The wireless service network is designed to be open, wherein it is sufficiently secure as an open service network but insufficient as a closed one.

### Summary of the invention

It is an aim of the present invention to eliminate these problems of a wireless communication network or an operator local area network, and to present a method for connecting different elements of the communication network and communication devices to each other.

Some embodiments of the invention include a so-called open communication network or a closed communication network, or a so-called combined communication network in which said open and closed communication networks are simultaneously provided within the same place of business.

The communication networks according to the invention are presented in the independent claims 1 and 13.

The invention is based on the use of bridged communication network connections, particularly in such a way that the communication devices responsible for the base station control functions are placed in a centralized location, for example in the operator's server device room. Said bridged connection is implemented between the server device room and the place of business, wherein the communication devices responsible for the base station functions are, in turn, placed in the place of business. By means of the invention, various separate and independent base station local area networks can be easily coupled to the same base station controller, wherein it is easy to expand the wireless local area network. Further, the structure of the network makes user authentication and roaming functions possible between all the base station local area networks belonging to the network.

The closed communication network, in turn, is based on the use of routed communication network connections, particularly in such a way that the devices enabling traffic in the network are placed in a centralized location, for example in the operator's service center. The communication devices responsible for the base station functions, in turn, are located in the place of business. Said routed connection is implemented between the service center and the place of business. Furthermore, by means of the invention, several separate and independent base station local area networks can be easily controlled from a single control device room comprising control devices. The communication device responsible for the base station functions is used as a supervisor on access to the network, wherein a separate access control network device will not be needed. The structure of the network makes user identification and roaming functions possible between all the base station local area networks belonging to the closed communication network.

The idea of the combined communication network is based on the combination of routed (closed communication network) and bridged (open communication network) communication network connections in such a way that the communication device responsible for the network routing functions is also installed to support the bridging of traffic in the open communication network. The combined tunneling of the communication network corresponds to normal bridging. The purpose of the communication device responsible for the bridge functions is to tunnel the traffic of the open network through the trunk line to an end point which forms the connection to the trunk line. Said traffic in the open network is encapsulated before its introduction into the same network with the traffic of the closed communication network, for which reason the solution does not involve any problems with data security.

Using the invention, other considerable advantages will be achieved as well. The construction of the communication network requires fewer critical communication devices, wherein the management is facilitated, the costs are decreased, and the existing devices can be utilized in a more efficient way. The maintenance times of the communication network become shorter, because base station controllers of different base station local area networks are located in a centralized manner. With the centralized implementation, the management of IP addresses becomes easier and the existing addresses can be used in a more efficient way. The expandability of the communication network becomes easier, because the server device locations can be distributed geographically, if necessary. Data security of the communication network becomes higher, for the most important components of the communication network can be centralized in the same location.

By the open communication network according to the invention, it is possible to provide public or company premises with separate wireless local area networks which are managed and controlled by a single service provider. Public premises to be particularly mentioned include various waiting rooms, assembly and conference halls, airports, railway stations, and public service vehicles. The communication network makes it possible for the user to use the network anywhere within the range of the communication network, wherein particularly the same terminal settings and identification data are implemented.

Within the closed communication network, companies are offered a modification of the above-described open communication network with data security. The closed communication network is constructed in the company's premises separately from the company's intranet. The closed communication network is controlled by the service provider, and it is only accessible by the company. Other persons than those having the necessary access rights cannot be connected to the closed communication network.

The combined communication network according to the invention provides an open and closed communication network in a cost-effective manner in the same premises. Thus, both the open and the closed communication network use the same network connection in the same place of business. The combined communication network is used to improve the data security of both the closed and the open communication network in a network-specific manner.

### Brief description of the drawings

In the following, the invention will be described in more detail by using as an example for each communication network an advantageous embodiment of the invention, wherein reference is at the same time made to the appended drawings, in which:
- Fig. 1: shows, in a schematic chart, an open communication network according to the invention,
- Fig. 2: shows, in a schematic chart, a closed communication network according to the invention,
- Fig. 3: shows, in a schematic chart, a combined communication network according to the invention,
- Fig. 4: shows, in a signalling chart, traffic in a closed communication network according to the invention, and
- Fig. 5: shows, in a signalling chart, traffic in a combined communication network according to the invention.

### Detailed description of the invention

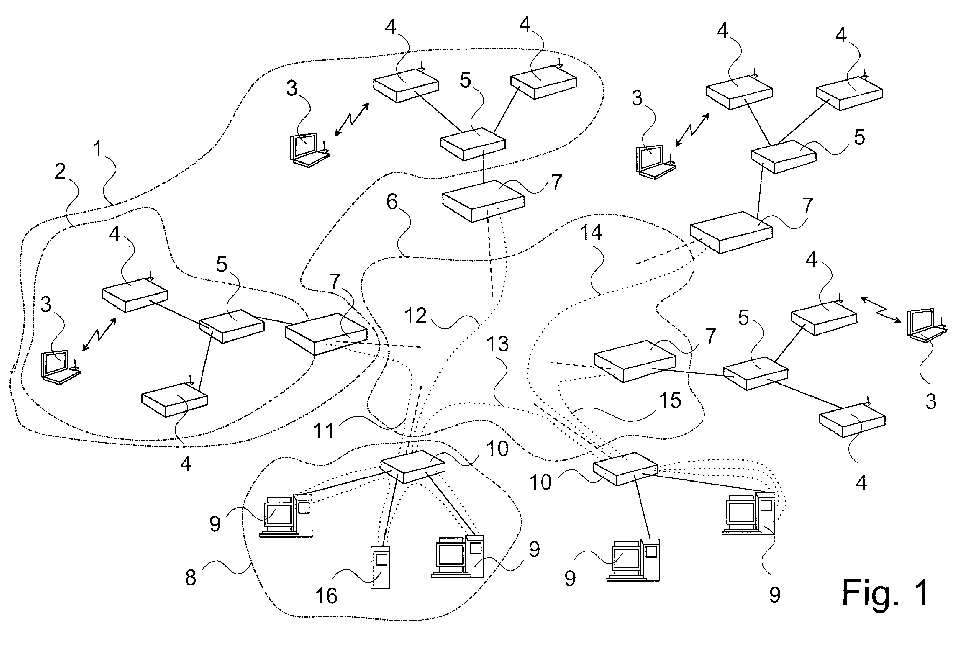

The more precise structure and function of single blocks, communication devices or communication paths, shown in Figs. 1 to 5, are either known as such or they can be arranged for the function according to the invention, on the basis of this description. The more detailed implementation will be obvious for anyone skilled in the art by means of the description, and it may vary.

In the following disclosure, for example a base station controller refers to a device and equipment arranged to take care of the functions of a base station controller, and a base station refers to a device and equipment arranged to take care of the functions of a base station. The same generalization is also valid for other devices, such as switches, bridges and routers.

With respect to the function of different network elements in the networks, as well as the log-in and authentication of the user, reference is made to what has already been stated in connection with the description of the background of the invention about *e.g.* the local area net-work, switches, bridges, routers, and other elements in the system.

The internet network refers to a global information system which is linked together by means of individual addresses based on the Internet protocol (IP) and its expansions and supplements, as well as IP compatible protocols. Said information system also supports data transmission using the TCP/IP protocol. In the description, the Ethernet network (IEEE standard 802.3) has been used as an example, but it is also possible to use other types of local area networks, such as Token Ring (IEEE standard 802.5) and Fiber Distributed Data Interface (FDDI).

### Open communication network:

The idea of the open communication network is that public and company premises are provided with separate wireless local area networks which are managed and controlled by the service provider. Open communication makes it possible for the user to use the network anywhere within the service network range, with the same terminal settings and identification data.

Figure 1 shows the basic architecture of the open communication network. Each company or place of business 1 comprises one or more independent local area networks 2 which are formed by means of one or more wireless terminals 3, one or more base stations 4, and a switch 5. The terminals 3 are also used by mobile users. The base stations 4 constitute, for example, an Ethernet network which is constructed so that a cabled port connection is advantageously constructed from each base station 4 to the switch 5 in the device room at the place of business, using for example a RJ45 10Base-T port connection. There is no need to limit the number of ports in the switch 5.

A connection to the Internet network 6 is also coupled to the same device room. The connection is formed by, for example, a bridge 7 which also has an RJ45 10Base-T connection point. Because the local area network is an Ethernet network with a normal structure, the base station local area network 2 is coupled to the bridge 7, for example, by a cabled RJ45 10Base-T port connection. In practice, the connection is implemented in the server device room of the operator 8, which also accommodates one or more base station controllers 9, a router, a switch or another suitable communication device 10 with a connection to the Internet and in which the bridged connections 11-14 are terminated.

By means of the bridging 11, the base station controller 9 is connected to a separate base station local area network 2. The base station controller 9 is cabled, for example, by an RJ45 10Base-T port connection, and for the operation of the controller 9, it is insignificant whether it is located separately close to or at a considerable distance from the local area network 2. With several base station local area networks 2 coupled to the same base station controller 9, the bridged connections 11-15 and the controllers 9 in the centralized device room are coupled to a trunk switch (indicated with a device 10), whose properties include support of virtual local area networks (virtual LAN, VLAN). By means of the trunk switch 10, the bridged network connections 11-15 are led to the desired port and this way to the desired base station controller 9.

The users 3 are identified in such a way that the base station controllers 9 are also coupled to the same user database 16 which is, for example, a RADIUS server (remote authentical dial in user service). The combining of the server device rooms is preferably implemented so that the operator 8, *i.e.* the communication network, has a main server device room where also the centralized user database 16 is located. The other server device rooms are also similar in other respects, but with a variable number of controllers 9. The base station controllers 9 of different server device rooms are coupled to the user database 16. The user database 16 can be physically distributed, even though it would seem a uniform database with respect to its operation.

### Closed communication network:

The idea of the closed communication network is to provide a company's premises with a separate wireless local area network which is separate from the company's intranet and is controlled by the service provider. Users other than those having the necessary access rights, such as employees of the company, cannot be connected to the closed communication network. Using this network, it is possible to outsource the wireless local area network of the company to be managed by the service provider.

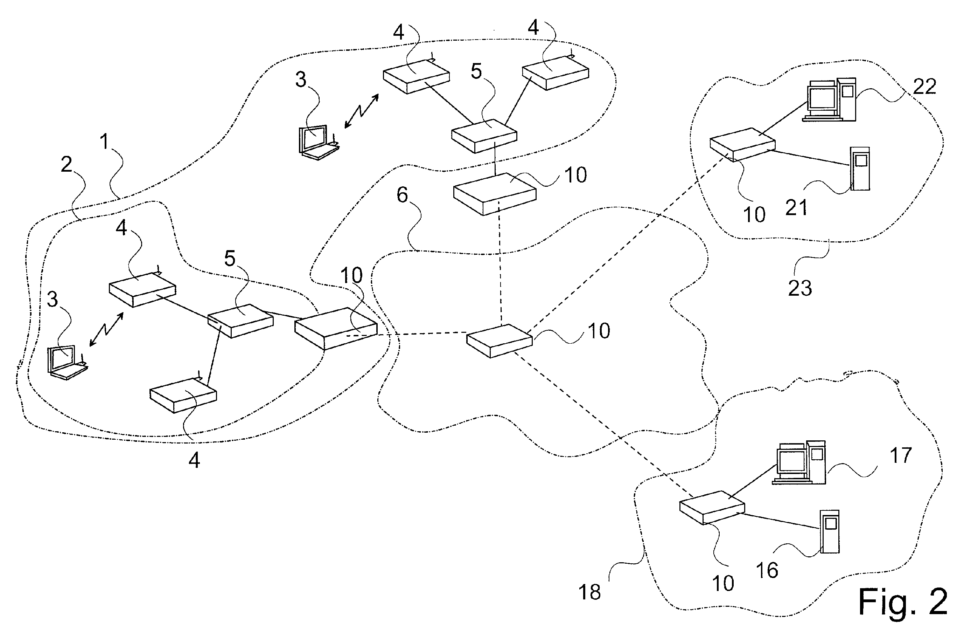

Figure 2 shows the basic architecture of the closed service network. The company or place of business 1 comprises one or more independent local area networks 2 which are formed by means of one or more wireless terminals 3, one or more base stations 4, and a switch 5. The terminals 3 are used by mobile persons. The base stations 4 constitute, for example, an Ethernet which is constructed so that preferably a cabled port connection is constructed from each base station 4 to the switch 5 in the device room at the place of business, using for example a RJ45 10Base-T port connection. There is no need to limit the number of ports in the switch 5.

A connection to the Internet network 6 is also coupled to the same device room. The connection is formed by a router 10 which also has an RJ45 10Base-T connection point. Because the local area network is an Ethernet with a normal structure, the base station local area network 2 is coupled to the router 10, for example, by a cabled RJ45 10Base-T port connection. The used network connection is terminated in the Internet 6 which has an open connection to the desired addresses. By default, the connection is only allowed for the virtual private network (VPN) server of the company.

The base station 4, which supports wireless local area network technology, is used for access control, wherein there is no need for a separate access control network device. Each base station 4 must have an IP level connection to the user database server 16 of the service center 18, which is for example a RADIUS server (remote authentication dial in user service). This user database server manages clients, that is, users with access to the closed communication network, in a centralized manner. The router network of the closed communication network are to be managed by the control devices 21, 22 in managing networks 23.

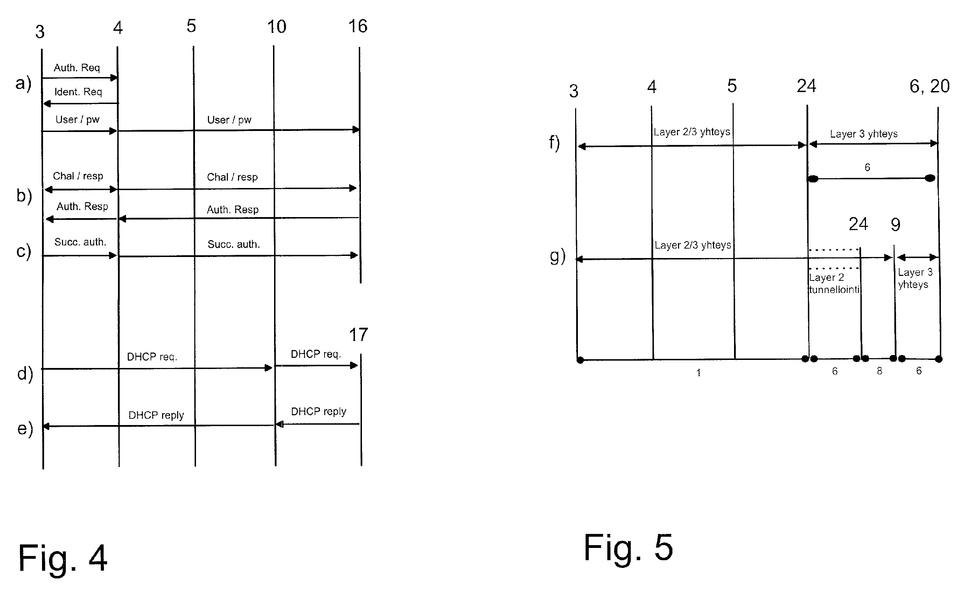

Logging in the closed communication network can be preferably implemented in the following way (Fig. 4).

Point a: The terminal 3 transmits a request '*auth. req.'* complying with a known protocol, such as the Extensible Authentical Protocol (EAP), to the base station. The base station 4 receives the message and transmits an identification message *'ident. req.'* to the terminal 3. The user responds to the identification message by entering a user identification *'user'* and a password *'pw',* which is preferably a PIN code or another corresponding identification. The data and the response formed of it is transmitted by the EAP protocol, or the like, to the base station 4, which preferably converts the data to the RADIUS protocol. The data are transmitted further on the trunk line, preferably by the User Datagram Protocol (UDP), to the user database server 16.

Point b: The terminal 3, the base station 4 and the user database server 16 apply the challenge/response method *'Chal*/*resp',* '*Auth*/*resp*.' to determine whether the entered data is correct.

Point c: If the data is correct '*Succ. auth*', the user is logged in the closed communication network.

After this, the user is given an IP address from a centralized DHCP server 17 (dynamic host configuration protocol). The DHCP server 17 is located in the same service center as the user database server 16. Because the DHCP server 17 is centralized and placed in the service center 18, the used routers 10 must function and support the transmission of the address (DHCP Relay). The allocation of IP addresses is illustrated in the signalling chart 4, starting from point d:

Point d: After the user has been successfully logged in the communication network, the terminal 3 transmits a DHCP request '*DHCP req'* to the network. The network router 10 receives the request and transmits it further to the centralized DHCP server 17.

Point e: When the DHCP server 17 receives the request, it retrieves the first vacant IP address from its database and transmits it back to the router 10 in a '*DHCP reply'.* The router 10 transmits the data to the terminal 3, and the terminal 3 may start the traffic.

### Combined communication network:

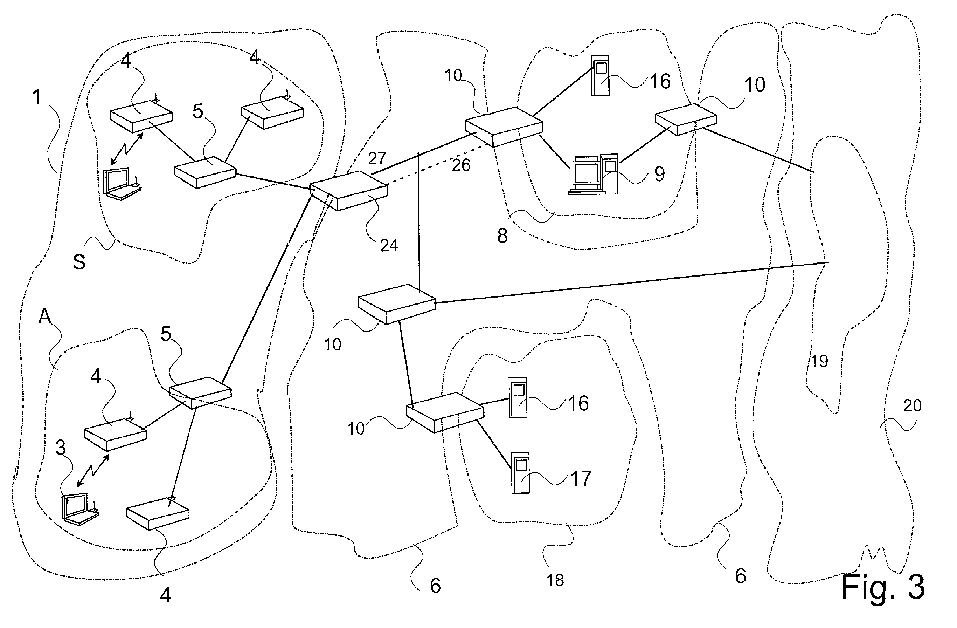

Because the open and the closed communication networks both have their own advantages, it is practical that their best aspects are combined, for example, by providing open and closed services simultaneously within the same place of business. For this purpose, a combined communication network is implemented, and it is shown in Fig. 3.

As presented above, the open communication network A consists of base stations 4, network switches 5, base station controllers 9, and a user database server 16. Thus, the base stations 4 are used to construct a separate and independent base station local area network within the place of business 1. The base station controllers 9 are centralized in the same server device room 8. In order to couple the base station local area network to the respective centralized base station controller 9, a bridged 26 network connection must be provided between said server device room 8 and the place of business 1.

In connection with the closed communication network, it was presented that said closed communication network S consists of base stations 4, network switches 5, routers 10, a DHCP server 17, as well as a user database server 16. As in the open communication network, also in the closed communication network, a separate and independent base station local area network is constructed of base stations 4 within the place of business 1. The base station local area network of the closed communication network is coupled to the trunk line 6 by means of a routed network connection 27.

Figure 3 shows an example of a combined wireless communication network. The combined service network comprises both the open A and the closed S communication networks, both of said communication networks A, S being separate from the intranet 20 of the outlet. Thus, a network connection 24 is used as the network connection for both the open and the closed services. Preferably, the bridge router 24 of the combined communication network is formed to support bridge functionality in addition to the routing, but it is possible to install a separate bridge device in the trunk line. The function of the bridge router 24 is to tunnel 26 the traffic in the open communication network A by normal bridging through the trunk line 6 to the terminal point of the open communication network, such as the router 10 with a connection to the Internet/Intranet network 20 and at which the bridged connections are terminated Another function of the bridge router 24 is to route 27 the traffic of the closed communication network S by the described routing in the trunk line 6 to the termination point, such as the Intranet 20 and a VPN (Virtual Private Network) server 19.

Because the traffic in the open communication network A is encapsulated before its entry in the same network with the closed communication network S, there will be no problem with the data security of the combined communication network. The signalling chart 5 illustrates the route from the terminal 3 to the Intranet 20 in the combined communication network.

In the combined communication network, the route from the terminal to the Intranet can, with respect to the closed communication network (Fig. 5, point f), be executed in the following way. Between the terminal 3 and the bridge router 24, there are tunneling (Layer 2) and IP level (Layer 3) connections. The standard route from the terminal 3 is via the router 10. Starting from the router 10, the terminal 3 has an IP level (Layer 3) connection to the Internet 6 and the Intranet 20.

In the combined communication network, the route from the terminal 3 to the Intranet, with respect to the open communication network (Fig. 5, point g), is such that between the terminal 3 and the base station controller 9 there are tunneling (Layer 2) and IP level (Layer 3) connections. The connection is tunneled (Layer 2) through the trunk line 6. The standard route from the terminal 3 is via the base station controller 9. Starting from the base station controller 9, the terminal 3 has an IP level (Layer 3) connection to the Intranet 20 and the Internet 6.

In addition to the above-described embodiments, the invention can also be applied within the scope of the appended claims.

## Claims

1. An open communication network which is arranged to serve at least wireless terminals (3) arranged for communication needs of users, and which comprises at least:
- first means (4) for base station functions and for forming a radio communication to the terminal (3), when said terminal is within the range of operation of said means, and
- second means (9) for base station controller functions, which are connected to one or more first means (4) for controlling their operation and, when necessary, for implementing communication between them,
**characterized in that** said communication network also comprises:
- third means (5, 6, 7, 10) for forming a bridged communication network connection (11, 12, 14, 15) between said first means and second means, wherein said bridged communication network connection is arranged to interconnect said first and second means which are located separately from each other.

2. The communication network according to claim 1, **characterized in that** several first means (4) are interconnected to form an independent local area network (2), to which said bridged data transmission connection is connected.

3. The communication network according to claim 1 or 2, **characterized in that** the communication network connection (11, 12, 14, 15) is formed in the Internet.

4. The communication network according to any of the claims 1 to 3, **characterized in that** at least one set of first means (4) is placed in the premises (1) of a company and at least one set of second means (9) is placed in the premises (8) of the operator of the communication network.

5. The communication network according to any of the claims 1 to 4, **characterized in that** the bridged communication network connection (11, 12, 14, 15) is, with respect to the base station controller functions, arranged to correspond to a situation, in which the first means (4) are directly coupled to the second means (9).

6. The communication network according to any of the claims 1 to 5, **characterized in that** it comprises several first means (4) which are located separately from each other and from which each a bridged communication network connection (11, 12, 14, 15) is formed to the same second means (9).

7. The communication network according to any of the claims 1 to 6, **characterized in that** the connection of the first means (4) and/or the second means (9) to the communication network is at least partly constructed with switch means (5, 7), in which the bridged connection (11, 12, 14, 15) is terminated.

8. The communication network according to any of the claims 1 to 7, **characterized in that** the bridged connection (11, 12, 14, 15) is at least partly constructed with the router means (7) of the communication network.

9. The communication network according to any of the claims 1 to 8, **characterized in that** it also comprises distributed or centralized user database means (16) for user authentication, to which means at least one set of second means (9) is coupled.

10. The communication network according to any of the claims 1 to 9, **characterized in that** at least one set of first means (4) is placed in public premises and at least one set of second means (9) is placed in the premises (8) of the operator of the communication network.

11. The communication network according to any of the claims 1 to 8, **characterized in that** several second means (9) which are each intended for different first means (4), are placed in the premises (8) of the operator of the communication network.

12. The communication network according to claim 11, **characterized in that** it also comprises user database means (16) for user authentication, to which means at least one set of second means (9) is coupled, and which are also placed in the premises (8) of the operator of the communication network.

13. A communication network which is arranged to serve at least wireless terminals (3) arranged for the communication needs of users belonging to a defined group, and which comprises at least:
- first means (4) for base station functions and for forming a radio communication to the terminal (3), when said terminal is within the range of operation of said means, and
- second means (17) for giving the user an address for communication, which second means (17) are connected to one or several sets of first means (4),
**characterized in that** said communication network also comprises:
- third means (10) for forming a routed communication network connection between said first means and second means, wherein said routed communication network connection is arranged to interconnect said first and second means which are located separately from each other.

14. The communication network according to claim 13, **characterized in that** several first means (4) are interconnected to form an independent local area network (2), to which said routed data transmission connection is connected.

15. The communication network according to claim 13 or 14, **characterized in that** the communication network connection is formed in the Internet (6).

16. The communication network according to any of the claims 13 to 15, **characterized in that** at least one set of first means (4) is placed in the premises (1) of a company and at least one set of second means (17) is placed in the premises (18) of the operator of the communication network.

17. The communication network according to any of the claims 13 to 16, **characterized in that** the routed communication network connection is, with respect to the functions, arranged to correspond to a situation, in which the first means (4) are directly coupled to the second means (17).

18. The communication network according to any of the claims 13 to 17, **characterized in that** it comprises several first means (4) which are located separately from each other and from which each a routed communication network connection is formed to the same second means (17).

19. The communication network according to any of the claims 13 to 17, **characterized in that** the connection of the first means (4) to the communication network is at least partly constructed with the switch means (5).

20. The communication network according to any of the claims 13 to 19, **characterized in that** it also comprises distributed or centralized user database means (16) for user authentication, to which means at least one set of second means (17) is coupled.

21. The communication network according to any of the claims 13 to 20, **characterized in that** at least one set of first means (4) is placed in public premises and at least one set of second means (17) is placed in the premises (18) of the operator of the communication network.

22. The communication network according to any of the claims 13 to 21, **characterized in that** several second means (17), which are each intended for different first means (4), are placed in the premises (18) of the operator of the communication network.

23. The communication network according to claim 22, **characterized in that** it also comprises user database means (16) for user authentication, to which means at least one set of second means (17) is coupled, and which are also placed in the premises (18) of the operator of the communication network.

24. The communication network according to any of the claims 20 to 23, **characterized in that** it also comprises managing means (21, 22) which are intended to control the operation of the means (4, 5, 10, 16, 17) of the communication network.

25. The communication network according to any of the preceding claims, **characterized in that** the third means (10) are also arranged to form a bridged data transmission connection (26) for combined communication.

26. The communication network according to claim 25, **characterized in that** one or more network elements (9) responsible for the base station controller functions are also connected to the third means (10), to execute said combined communication.
